# EUROPEAN PATENT APPLICATION

(11) **EP 1 792 884 A2**
(43) Date of publication of application: **06.06.2007**
(21) Application number: 06118291.1
(22) Date of filing: 02.08.2006
(51) Int. Cl.: C04B 41/85

(54) **Support for decorating means**

(30) Priority: 12.08.2005 IT MO20050214
(71) Applicant: Tecno-Europa S.r.l., 41043 Formigine (IT)
(72) Inventor: Elmetti Valdo, Vittorio, 42014, Castellarano (RE) (IT)
(74) Representative: Luppi, Luigi

(57) **Abstract**

Supporting sheet means (8; 10) suitable for supporting decorating means (11) and comprising ceramic materials and a binding agent; a method for producing supporting sheet means (8; 10), suitable for supporting decorating means (11), comprises: obtaining a mixture by mixing with water a composition comprising ceramic materials and a binding agent; pressing said mixture in such a way as to obtain a sheet-shaped finished product.

## Description

The invention relates to a support for decorating means, that is usable for decorating a ceramic product, for example a tile, and a method for producing the above-mentioned support.

In the ceramics field, supports are known for decorating substances, made in the form of paper sheets or of textile sheets and impermeabilised by means of plasticising substances and/or silicone, or made in the shape of plastic sheets. On a surface of these supports the decorating substances are arranged, made, for example, of colouring oxides applied in preset quantities and in such a way as to define an image or a decorative pattern. Subsequently, the supports are associated with respective unfired semifinished ceramic products and the latter are fired in the kiln. During firing, the support is destroyed by the heat whilst the thermally resistant decorating substances adhere to the visible face of the product and form the decorative pattern, which gives aesthetic and commercial value to the finished product.

A drawback of the prior art consists of the fact that, during combustion of the material forming the support, gas bubbles develop (degassing) through the effect of which the decorating substances may adhere in a less effective way to the semifinished product below.

Furthermore, the gas bubbles, by interposing between the surface of the semifinished product and the decorating substances, tend to modify the preset arrangement of the latter. Consequently, the decorative pattern that it was wished to produce by means of the decorating substances may be changed, or anyway poorly defined, in the finished product.

An object of the invention is to improve known methods for producing supports for decorating means that are usable for decorating ceramic products, for example tiles.

Another object is to provide a method for producing a support for decorating means, usable for decorating ceramic products, which enables the decorating means to adhere in an optimal manner to the products to be decorated.

A further object is to provide a method for producing a support for decorating means, usable for decorating ceramic products, which enables the decorating means to produce well-defined decorations on the products to be decorated.

Another further object is to provide a support for decorating means, usable for decorating ceramic products and such as to enable the decorating means to adhere in an optimal manner to the products to be decorated.

Still a further object is to provide a support for decorating means, usable for decorating ceramic products and such as to enable the decorating means to produce well-defined decorations on the products to be decorated.

In a first aspect of the invention, supporting sheet means is provided that is suitable for supporting decorating means and comprises ceramic materials and a binding agent.

In an embodiment, the supporting sheet means comprises ceramic pigments.

In another embodiment, the binding agent comprises cellulose.

In a second aspect of the invention, there is provided a method for producing supporting sheet means, suitable for supporting decorating means, comprising:
- obtaining a mixture by mixing with water a composition comprising ceramic materials and a binding agent;
- pressing said mixture in such a way as to obtain a sheet-shaped finished product.

In an embodiment, the method comprises adding ceramic pigments to the composition to be mixed.

Owing to these aspects, a support is made available for decorating means, made in the form of a sheet and usable for decorating a semifinished ceramic product. The decorating means, for example colouring oxides, can be applied to the surface of the support, which in use is not in contact with the semifinished product to be decorated.

Further, pigments can be mixed with the binding agent and the ceramic materials during the preparation of the mixture. The support provided by the invention is obtained by means of a composition comprising both ceramic materials, i.e. materials having chemical-physical properties similar to those of the material constituting the product to be decorated, and non-ceramic materials, i.e. the binding agent. When the semifinished product is fired in the kiln, the ceramic materials in the support are fired whilst the non-ceramic materials are destroyed.

Owing to this, the quantity of gas that develops through partial combustion of the support is significantly less than the quantity of gas that develops in complete combustion of the supports of known type, which supports are made entirely of non-ceramic material. Further, the ceramic materials forming the support integrate substantially with the underlying semifinished ceramic product during firing.

Consequently, the decorating means can adhere in an optimal manner to the underlying surface of the product and can further produce a significantly well-defined decorative pattern as the preset arrangement of the decorating means in the support is not substantially altered during firing of the semifinished product in the kiln.

The invention will be better understood and implemented with reference to the attached drawings that show some exemplifying but non-limitative embodiments thereof, in which:
Figure 1 is a longitudinal schematic, fragmentary and partially sectioned view showing the various steps of a method for producing supporting sheet means;
Figure 2 is a perspective schematic view showing supporting sheet means provided with decorating means and applied to a semifinished product.

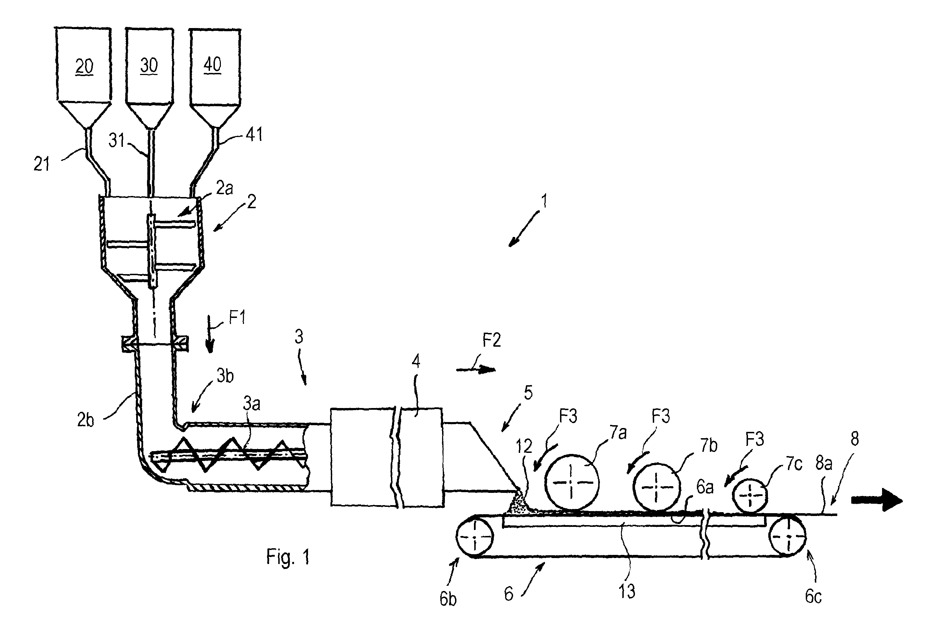

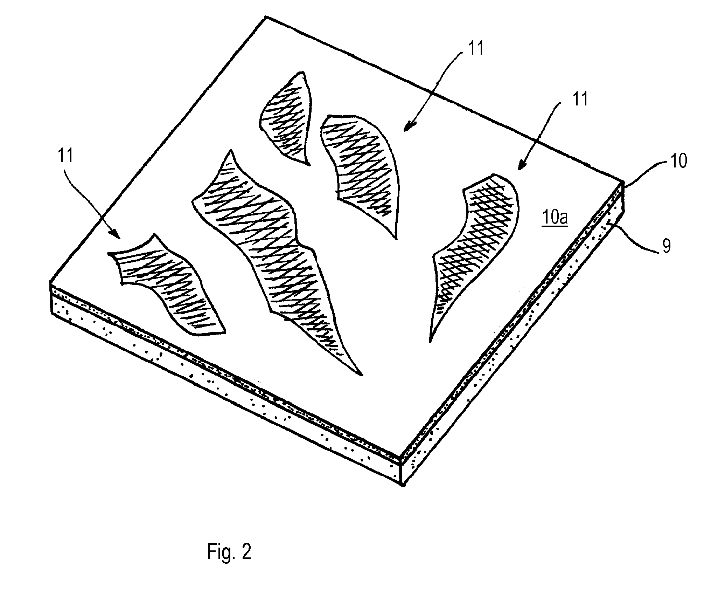

With reference to Figures 1 and 2, a web of supporting sheet 8, suitable for receiving decorating means 11 and being cut so as to form portions of supporting sheet 10, is obtained by preparing and processing a mixture in an apparatus 1. The mixture is obtained by adding a suitable quantity of water to a composition having an average percentage formula indicated in Table 1 set out below:

**Table 1**

| Component | % range in weight |
|---|---|
| Ceramic materials | 50-90 |
| Binding agent | 10-50 |

The ceramic materials are of known type. The binding agent comprises synthetic polymers or, for example, cellulose. In an embodiment, the composition also comprises ceramic pigments and has an average percentage formula expressed in Table 2 below:

**Table 2**

| Component | % range in weight |
|---|---|
| Ceramic materials | 50-90 |
| Binding agent | 5-20 |
| Ceramic pigments | 5-30 |

The ceramic pigments are of known type, for example colouring oxides.

In an embodiment, the ceramic pigments are equal to about 7% of the composition.

With particular reference to Figure 1, preset quantities of the components indicated in Table 2 are delivered, together with a preset volume of water, into a supplying tank 2 of the apparatus 1. The ceramic materials, the binding agent and the ceramic pigments are contained respectively in a first reservoir 20, in a second reservoir 30 and in a third reservoir 40, from which they are discharged into the supplying tank 2 by means of a first conduit 21, a second conduit 31 and a third conduit 41.

In an embodiment that is not shown, the composition is used that is disclosed in Table 1, which composition does not comprise the ceramic pigments and the supplying tank 2 thus receives only the ceramic materials coming from the first reservoir 20 and the binding agent coming from the second reservoir 30.

The various components and the water are mixed together owing to a mixing device 2a, of known type, with which the supplying tank 2 is provided. In this way a mixture is produced that falls through gravity in a direction F1 through a connecting conduit 2b, which conduit is aligned on a longitudinal axis (not shown) of the supplying tank 2. The mixture is thus transferred from the supplying tank 2 to an inlet portion 3b of a conveying screw extruder 3, which is connected to the connecting conduit 2b and arranged in a manner that is substantially orthogonal to the latter. In the conveying screw extruder 3, of known type, a conveying screw 3a conveys the mixture according an advancing direction F2 that is substantially orthogonal to the direction F1 and opposite the connecting conduit 2b. In this way, the mixture passes through a drying device 4, of known type, which is associated with the conveying screw extruder 3 and by means of which the amount of water in the mixed is reduced approximately to 6%. The drying device 4 is arranged near to an outlet port 5 of the conveying screw extruder 3, opposite the inlet portion 3b. From the drying device 4 a semifinished mixture 12 exits that reaches the outlet port 5 and that, by means of the latter, exits from the conveying screw extruder 3, falling onto an upper branch 6a of a belt conveyor 6. The belt conveyor 6, of known type, is arranged parallel to the conveying screw extruder 3 and conveys the semifinished mixture 12 in the direction F2. The upper branch 6a of the belt conveyor 6 runs on a stiff plane 13, which is for example made of steel. Near to the upper branch 6a a series of pressing rollers 7 is arranged, indicated as 7a, 7b, and 7c, which are driven by driving means that is of known type and not shown. The pressing rollers 7a-7c, rotating according to a same direction F3, are arranged in sequence between a first end 6b of the belt conveyor 6, which first end is near to the outlet port 5 of the conveying screw extruder 3, and a second end 6c of the belt conveyor 6, which second end is opposite the outlet port 5. Proceeding from the first end 6b to the second end 6c, the pressing rollers 7a-7c further have a decreasing transverse diameter and are arranged at progressively decreasing distances from the upper branch 6a of the belt conveyor 6. As a result, the pressing roller 7a, which is located near to the first end 6b, has a greater size and is farther from the upper branch 6a with respect to the pressing roller 7c, which is located near the second end 6c. When conveyed on the belt conveyor 6, the semifinished mixture 12 is pressed between the pressing rollers 7a-7c and the stiff plane 13 on which the upper branch 6a runs. The thickness of the semifinished mixture 12 is then reduced progressively until it reaches a minimum value near to the second end 6c of the belt conveyor 6, i.e. where the semifinished mixture 12 passes between the pressing roller 7c and stiff plane 13 on which the upper branch 6a runs. In this way the web of supporting sheet 8 is obtained, which has a visible face 8a opposite the upper branch 6a. The web of supporting sheet 8 exits from the apparatus 1 at the second end 6c of the belt conveyor 6. If the composition indicated in Table 2 is used, the web of supporting sheet 8 consists of coloured material. The web of supporting sheet 8 can be wrapped around itself, through mechanical means of known type (not shown), in order to form a reel that can be stored until the moment of use.

In an embodiment that is not shown, at the outlet of the apparatus 1 a decorating station of known type is provided, comprising for example a decorating roller, in which station the decorating means 11 is applied, for example ceramic pigments arranged in such a way as to form a decorative pattern, on the visible face 8a of the web of supporting sheet 8.

In another embodiment that is not shown, at the outlet of the apparatus 1 there is provided a cutting station, of known type, passing through which the web of supporting sheet 8 is cut into portions of preset shape and/or dimensions.

In a further embodiment that is not shown, at the outlet of the apparatus 1 the decorating station and the cutting station are arranged in sequence.

With particular reference to Figure 2, a portion of supporting sheet 10, provided with the decorating means 11, is applied to a visible face (that is not shown) of a semifinished ceramic product, for example an unfired tile 9, through mechanical means of known and not shown type. The portion of supporting sheet 10 is obtained from the web of supporting sheet 8 by passing the latter in sequence through the aforementioned decorating and cutting stations. The portion of supporting sheet 10 is cut in such a way as to have a shape and dimensions substantially corresponding to those of the unfired tile 9. In a visible face 10a of the portion of supporting sheet 10, opposite the face of the portion of supporting sheet 10 that is in contact with the visible face of the unfired tile 9, the decorating means 11, for example colouring oxides, is contained that is arranged in such a manner as to form a decorative pattern.

In an embodiment that is not shown, the portion of supporting sheet 10 does not comprise the decorating means 11 but consists of coloured material, inasmuch as it is obtained by using the aforementioned embodiment of the composition comprising the ceramic pigments.

In another embodiment that is not shown, the portion of supporting sheet 10 consists of coloured material and is also provided with the decorating means 11.

In a further embodiment that is not shown, a protective layer of known type is applied to the visible face 10a of the portion of supporting sheet 10.

When the unfired tile 9 and the respective portion of supporting sheet 10 are placed in the kiln, the unfired tile 9 and the ceramic components of the portion of supporting sheet 10 are fired and integrated together, whilst the non-ceramic components of the portion of supporting sheet 10 are destroyed by the heat. Owing to the reduced quantity of combustion gas that develops from the portion of supporting sheet 10 during firing in the kiln and owing to the reciprocal integration between the tile and the ceramic components of the portion of supporting sheet 10, the decorating means 11 can adhere in an optimum manner to the visible face of the tile and produce a significantly well-defined decorative pattern.

## Claims

1. Supporting sheet means (8; 10), suitable for supporting decorating means (11) and comprising ceramic materials and a binding agent.

2. Supporting sheet means according to claim 1, wherein said ceramic materials are provided in a weight percentage comprised between 50% and 90% and said binding agent is provided in a weight percentage correspondingly comprised between 50% and 10%.

3. Supporting sheet means according to claim 1, further comprising ceramic pigments.

4. Supporting sheet means according to claim 3, wherein said ceramic materials are provided in a weight percentage comprised between 50% and 90%, said binding agent is provided in a weight percentage comprised between 5% and 20% and said ceramic pigments are provided in a weight percentage comprised between 5% and 30%.

5. Supporting sheet means according to claim 4, wherein ceramic pigments have a weight percentage of about 7%.

6. Supporting sheet means according to any preceding claim, wherein said binding agent comprises synthetic polymers.

7. Supporting sheet means according to any preceding claim, wherein said binding agent comprises cellulose.

8. Supporting sheet means according to any preceding claim, made in the form of a web of supporting sheet (8).

9. Supporting sheet means according to claim 9, wherein said decorating means (11) is applied to a face (8a) of said web of supporting sheet (8).

10. Supporting sheet means according to any preceding claim, made in the form of a portion of supporting sheet (10).

11. Supporting sheet means according to claim 11, wherein said decorating means (11) is applied to a face (10a) of said portion of supporting sheet (10).

12. Slab-shaped ceramic support (9) having at least one surface which is covered with supporting sheet means (8; 10) according to any one of claims 1 to 11.

13. Slab-shaped ceramic support according to claim 12, wherein said surface is completely covered by said supporting sheet means (8; 10).

14. Slab-shaped ceramic support according to claim 12, or 13, wherein said supporting sheet means (8; 10) is arranged in contact with a face of said ceramic support opposite the installation face.

15. Slab-shaped ceramic support according to claim 14, wherein said decorating means (11) is arranged on a face (8a; 10a) of said supporting sheet means (8; 10) opposite the face of said supporting sheet means (8; 10) that is in contact with said ceramic support.

16. Method for producing supporting sheet means (8; 10), suitable for supporting decorating means (11), comprising:
- obtaining a mixture by mixing with water a composition comprising ceramic materials and a binding agent;
- pressing said mixture in such a way as to obtain a sheet-shaped finished product.

17. Method according to claim 16, comprising using cellulose as a binding agent.

18. Method according to claim 16, or 17, comprising using a synthetic polymer as a binding agent.

19. Method according to any one of claims 16 to 18, further comprising partially drying said mixture before said pressing.

20. Method according to claim 19, wherein said partially drying is conducted in such a way as to reduce the amount of water in said mixture approximately to 6%.

21. Method according to any one of claims 16 to 20, wherein said pressing comprises using pressing roller means (7a, 7b, 7c) arranged near to a surface (6a) of conveying means (6), said surface (6a) conveying, in use, said mixture.

22. Method according to any one of claims 16 to 21, wherein said pressing is conducted in such a way as to reduce progressively in thickness said mixture.

23. Method according to claim 22, as appended to claim 21, wherein said reducing progressively is obtained by arranging said roller means (7a, 7b, 7c) at progressively decreasing distances from said surface (6a).

24. Method according to claim 23, comprising using a plurality of roller means (7a, 7b, 7c).

25. Method according to any one of claims 16 to 24, wherein said obtaining a sheet-shaped finished product comprises obtaining a web (8).

26. Method according to claim 25, comprising applying said decorating means (11) to a face (8a) of said web (8).

27. Method according to claim 25, or 26, comprising cutting said web (8) in such a way as to divide said web (8) into portions (10) having a preset shape and dimensions.

28. Method according to any one of claims 16 to 27, wherein, before said obtaining a mixture, ceramic pigments are added to said composition.

29. Method according to claim 28, wherein said ceramic pigments are added in a weight percentage comprised between 5% and 30%.

30. Method according to claim 29, wherein said ceramic pigments are added in a weight percentage of about 7%.

31. Method according to any one of claims 16 to 30, wherein said ceramic materials are provided in a weight percentage comprised between 50% and 90%.

32. Method according to any one of claims 16 to 31, wherein said binding agent is provided in a weight percentage comprised between 10% and 50%.

33. Method according to any one of claims 16 to 31, wherein said binding agent is provided in a weight percentage comprised between 5% and 20%.
